Europäisches Patentamt

(19) European Patent Office

Office européen des brevets

(11) Publication number: **0 002 959**
**B1**

(12) EUROPEAN PATENT SPECIFICATION

(45) Date of publication of patent specification: **30.09.81**

(51) Int. Cl.³: **F 16 L 47/00**

(21) Application number: **78300904.6**

(22) Date of filing: **27.12.78**

(54) Pipe joints.

(30) Priority: **30.12.77 US 866028**

(43) Date of publication of application:
**11.07.79 Bulletin 79/14**

(45) Publication of the grant of the European patent:
**30.09.81 Bulletin 81/39**

(84) Designated Contracting States:
**BE CH DE FR GB IT LU NL SE**

(56) References cited:
**DE - A - 2 145 831**
**DE - A - 2 204 165**
**US - A - 3 957 382**

(73) Proprietor: **Lupke, Manfred Arno Alfred**
**35 Ironshield Crescent**
**Thornhill, Ontario (CA)**
Proprietor: **Lupke, Gerd Paul Heinrich**
**46 Stornoway Crescent**
**Thornhill, Ontario (CA)**

(72) Inventor: **Lupke, Manfred Arno Alfred**
**35 Ironshield Crescent**
**Thornhill, Ontario (CA)**
Inventor: **Lupke, Gerd Paul Heinrich**
**46 Stornoway Crescent**
**Thornhill, Ontario (CA)**

(74) Representative: **Thomas, Christopher Hugo, et al**
**D. Young & Co.**
**10 Staple Inn**
**London WC1V 7RD (GB)**

Courier Press, Leamington Spa, England.

Pipe joints

This invention relates to pipe joints.

There is a common requirement to join together pipe sections formed, for example, of thermoplastic material. Where the outer surfaces of the pipe sections are cylindrical, a joint can conveniently be made with a sleeve and suitable adhesive, but this is not possible if the pipe sections are corrugated. Other prior proposals, some of which are applicable to corrugated pipes, can be found in German patent specifications 2 145 831 and 2 204 165 and US patent specification 3 957 382, but none of these deal with the three-fold problem of providing a mechanical interlock, a seal and resistance to shearing forces.

According to the present invention there is provided a pipe joint comprising a pair of corrugated pipe sections aligned end to end, and characterised by the pipe sections having respective adjacent end portions located within an auxiliary sleeve of relatively hard thermoplastic material capable of resisting shearing forces tending to misalign the end portions of the pipe sections, a sealing ring located within the auxiliary sleeve and positioned to provide a seal at the join between the ends of the pipe sections, and an outer heat shrinkable sleeve shrunk into frictional engagement with said end portions and conforming to the corrugations of said end portions and interlocking therewith, the auxiliary sleeve and the sealing ring being clamped between the outer sleeve and said end portions.

By a "heat shrinkable sleeve" is meant a tubular body of thermoplastic material having an elastic memory, the body being initially in a heat-unstable stretched state so that, when heated, it shrinks to relieve the stresses introduced by stretching. Heat shrinkable sleeves are well known and have been used in numerous applications other than making pipe joints. As applied to pipe joints, heat shrinkable sleeves are found to offer a very simple and efficient coupling device for pipe sections, and more especially when at least one of the pipe sections has a corrugated exterior surface to which the sleeve conforms when shrunk onto it so as to provide mechanical interlock between the engaging parts.

The invention will now be described by way of example with reference to the accompanying drawing, in which:

Figure 1 is a longitudinal sectional view of a first embodiment of pipe joint according to the invention;

Figure 2 is a longitudinal sectional view of an auxiliary sleeve used in the first embodiment;

Figure 3 is a longitudinal sectional view of a second embodiment of pipe joint according to the invention;

Figure 4 is a longitudinal sectional view of an auxiliary sleeve used in the second embodiment;

Figure 5 is a longitudinal sectional view of a third embodiment of pipe joint according to the invention;

Figure 6 is a longitudinal sectional view of an auxiliary sleeve used in the third embodiment; and

Figure 7 is a view corresponding to Figure 2 of a modified auxiliary sleeve.

The pipe sections which are to be coupled to form the pipe joints to be described are corrugated, and may be formed of metal or of thermoplastic material. In the description which follows it will be assumed that the pipe sections are of thermoplastic material.

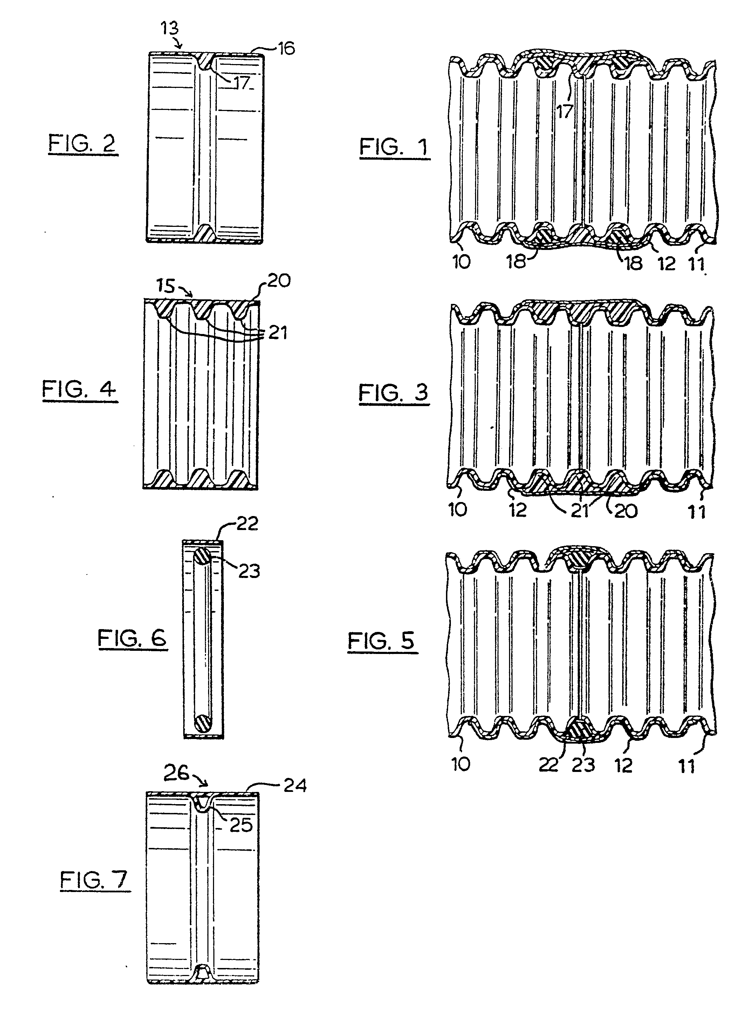

Referring to Figures 1 and 2, the first embodiment comprises a pair of pipe sections 10 and 11, a heat shrinkable sleeve 12 and an auxiliary sleeve 13, all of circular cross-section. The auxiliary sleeve 13 is formed of thermoplastic material, which may be heat shrinkable, and comprises an outer cylindrical portion 16 of relatively hard material to support the ends of the pipe sections 10 and 11, to ensure alignment as the pipe joint is made and resistance to shearing forces thereafter, and an internal annular portion 17 of relatively soft material which engages the ends of the pipe sections 10 and 11 to provide a seal at the join.

To make the pipe joint the ends of the pipe sections 10 and 11 are inserted into opposite ends of the auxiliary sleeve 13 and the heat shrinkable sleeve 12 which is initially of cylindrical configuration is arranged to overlie and overlap both ends of the auxiliary sleeve 16. The relative dimensions are such that the ends of the pipe sections 10 and 11 are a reasonably close fit in the auxiliary sleeve 13, and the heat shrinkable sleeve 12 is a reasonably close fit over the auxiliary sleeve 13. The heat shrinkable sleeve 12 is then heated so as to shrink it to the stable state, the heat shrinkable sleeve 12 frictionally engaging and gripping the exterior corrugated surfaces of the end portions of the pipe sections 10 and 11 and also closely gripping the auxiliary sleeve 13. As the heat shrinkable sleeve 12 shrinks, it conforms to the corrugated surfaces of the pipe sections 10 and 11, and so itself becomes corrugated, the corrugations of the heat shrinkable sleeve 12 registering with the corrugations of the pipe sections 10 and 11, and mechanically interlocking with them.

To strengthen the pipe joint still further, and to provide a further seal between the engaging surfaces of the pipe sections 10 and 11, the end portions of the pipe sections 10 and 11 or the interior of the auxiliary sleeve 13 and/or of the heat shrinkable sleeve 12 may first be coated with a suitable adhesive. Additional seals may be provided by means of silicone-rubber O-rings 18 interposed between the auxiliary sleeve and the end portions of the pipe sections 10 and 11.

Referring to Figures 3 and 4, in the second embodiment such additional seals are formed integrally with the auxiliary sleeve 15. As best seen in Figure 2, the auxiliary sleeve 15 comprises an outer cylindrical portion 20 having three internal integral annular portions 21. The outer portion 20 is of relatively hard thermoplastic material, while the annular portions 21 may be of a softer material, which deforms under pressure to provide seals. The completed pipe joint comprising the auxiliary sleeve 15 is shown in Figure 3, and apart from the points mentioned is generally similar to that of Figure 1.

Referring to Figures 5 and 6, the third embodiment comprises an auxiliary sleeve 22, best seen in Figure 6, which is formed of relatively hard thermoplastic material which is heat shrinkable, and a separate sealing ring 23 which is preferably of silicone-rubber. Apart from these points, the pipe joint is similar to that of Figure 1.

Figure 7 illustrates a modified auxiliary sleeve 26 which is very similar to the auxiliary sleeve 13 show in Figure 2, and comprises an outer cylindrical portion 24 of relatively hard thermoplastic material, which may be heat shrinkable, and an integral internal annular portion 25 which, instead of being solid, is hollow so as to deform under pressure and so provide a seal at the join of the pipe sections 10 and 11.

## Claims

1. A pipe joint comprising a pair of corrugated pipe sections (10 and 11) aligned end to end, and characterised by the pipe sections (10 and 11) having respective adjacent end portions located within an auxiliary sleeve (13, 15, 22 or 26) of relatively hard thermoplastic material capable of resisting shearing forces tending to misalign the end portions of the pipe sections (10 and 11), a sealing ring (17, 21, 23 or 25) located within the auxiliary sleeve (13, 15, 22 or 26) and positioned to provide a seal at the join between the ends of the pipe sections (10 and 11), and an outer heat shrinkable sleeve (12) shrunk into frictional engagement with said end portions and conforming to the corrugations of said end portions and interlocking therewith, the auxiliary sleeve (13, 15, 22 or 26) and the sealing ring (17, 21, 23 or 25) being clamped between the outer sleeve (12) and said end portions.

2. A pipe joint according to claim 1 wherein the sealing ring (17, 21 or 25) is integral with the auxiliary sleeve (13, 15 or 26).

3. A pipe joint according to claim 1 wherein the sealing ring (23) is separate from the auxiliary sleeve (22).

4. A pipe joint according to claim 1, claim 2 or claim 3 wherein the pipe sections (10 and 11), the auxiliary sleeve (13, 15, 22 or 26) and the outer sleeve (12) are of circular cross-section.

5. A pipe joint according to claim 1 comprising a plurality of said sealing rings (21) which sealing rings (21) are integral with the auxiliary sleeve (15), the spacing of the sealing rings (21) corresponding to the spacing of the corrugations of the pipe sections (10 and 11).

6. A pipe joint according to claim 1 wherein the sealing ring (25) is formed by a hollow annular projection integral with the interior of the auxiliary (26).

7. A pipe joint according to any one of the preceding claims wherein the pipe sections (10 and 11) are of circular cross-section and formed of thermoplastic material, the outer sleeve (12) is formed of heat shrinkable thermoplastic material, and the auxiliary sleeve (13, 15, 22 or 26) comprises an outer part (16, 20, 22 or 24) of relatively hard thermoplastic material and an inner part of relatively soft material forming the sealing ring (17, 21, 23 or 25).

## Revendications

1. Joint de tuyauterie comprenant deux sections de tuyau ondulé (10 et 11) alignées bout à bout, et caractérisé en ce que les sections de tuyau (10 et 11) présentent des tronçons terminaux adjacents respectifs situés dans un manchon auxiliaire (13, 15, 22 ou 26) en matière thermoplastique relativement dure capable de résister à des efforts cisaillants tendant à désaligner les tronçons terminaux des sections de tuyau (10 et 11), un joint d'étanchéité (17, 21, 23 ou 25) situé dans le manchon auxiliaire (13, 15, 22 ou 26) et placé de manière à assurer l'étanchéité à la jonction entre les extrémités des sections de tuyau (10 et 11), et un manchon extérieur (12) susceptible de retrait thermique amené par retrait en engagement frottant avec lesdits tronçons terminaux et épousant les ondulations desdits tronçons terminaux et emboîté dans ceux-ci, le manchon auxiliaire (13, 15, 22 ou 26) et l'anneau d'étanchéité (17, 21, 23 ou 25) étant enserrés entre le manchon extérieur (12) et lesdits tronçons terminaux.

2. Joint de tuyauterie selon la revendication 1, caractérisé en ce que l'anneau d'étanchéité (17, 21 ou 25) est solidaire du manchon auxiliaire (13, 15 ou 26).

3. Joint de tuyauterie selon la revendication 1, caractérisé en ce que l'anneau d'étanchéité (23) est séparé du manchon auxiliaire (22).

4. Joint de tuyauterie selon la revendication 1, la revendication 2 ou la revendication 3, caractérisé en ce que les sections de tuyau (10 et 11), le manchon auxiliaire (13, 15, 22 ou 26) et le manchon extérieur (12) sont à section circulaire.

5. Joint de tuyauterie selon la revendication 1, caractérisé en ce qu'il comprend une pluralité desdits anneaux d'étanchéité (21) lesquels anneaux d'étanchéité (21) sont solidaires du manchon auxiliaire (15), l'espacement des anneaux d'étanchéité (21) correspondant à l'espacement des ondulations des sections de tuyau (10 et 11).

6. Joint de tuyauterie selon la revendication 1, caractérisé en ce que l'anneau d'étanchéité (25) est formé par une protubérance annulaire creuse solidaire de l'intérieur du manchon auxiliaire (26).

7. Joint de tuyauterie selon l'une quelconque des revendications précédentes, caractérisé en ce que les sections de tuyau (10 et 11) sont à section circulaire et formées de matière thermoplastique, le manchon extérieur (12) est formé de matière thermoplastique sujette au retrait thermique, et le manchon auxiliaire (13, 15, 22 ou 26) comprend une partie extérieure (16, 20, 22 ou 24) en matière thermoplastique relativement dure et une partie intérieure en matière relativement molle formant l'anneau d'étanchéité (17, 21, 23 ou 25).

## Patentansprüche

1. Rohrverbindung mit einem Paar gewellter oder gerippter Rohrabschnitte (10 und 11), die Ende an Ende fluchtend ausgerichtet sind, dadurch gekennzeichnet, daß die Rohrabschnitte (10 und 11) jeweils zueinander benachbarte Endabschnitte haben, die in einer Hilfshülse (13, 15, 22 oder 26) aus relativ hartem thermoplastischem Material angeordnet sind, welches Scherkräften widerstehen kann, die dazu neigen, die Endabschnitte der Rohrabschnitte (10 und 11) aus ihrer fluchtenden Ausrichtung zu bringen, ein Dichtring (17, 21, 23 oder 25) in der Hilfshülse (13, 15, 22 oder 26) derart angeordnet ist, daß er eine Dichtung an der Verbindung zwischen den Enden der Rohrabschnitte (10 und 11) ergibt, und eine äußere wärmeschrumpfbare Hülse (12) in Reibeingriff mit den Endabschnitten aufgeschrumpft und an die Wellungen oder Rippungen der Endabschnitte angepaßt und mit ihnen verzahnt ist, wobei die Hilfshülse (13, 15, 22 oder 26) und der Dichtring (17, 21, 23 oder 25) zwischen der äußeren Hülse (12) und den Endabschnitten festgeklemmt sind.

2. Rohrverbindung nach Anspurch 1, worin der Dichtring (17, 21 oder 25) aus einem Stück mit der Hilfshülse (13, 15 oder 26) besteht.

3. Rohrverbindung nach Anspruch 1, worin der Dichtring (23) von der Hilfshülse (22) getrennt ist.

4. Rohrverbindung nach Anspruch 1, Anspruch 2 oder Anspruch 3, worin die Rohrabschnitte (10 und 11), die Hilfshülse (13, 15, 22 oder 26) und die äußere Hülse (12) kreisförmigen Querschnitt haben.

5. Rohrverbindung nach Anspruch 1 mit mehreren Dichtringen (21), welche aus einem Stück mit der Hilfshülse (15) bestehen, wobei der Abstand zwischen den Dichtringen (21) dem Abstand der Wellungen oder Rippungen der Rohrabschnitte (10 und 11) entspricht.

6. Rohrverbindung nach Anspruch 1, worin der Dichtring (25) von einem hohlen ringförmigen Vorsprung gebildet wird, der aus einem Stück mit dem Inneren der Hilfshülse (26) besteht.

7. Rohrverbindung nach einem der vorausgehenden Ansprüche, worin die Rohrabschnitte (10 und 11) ringförmigen Querschnitt haben und aus thermoplastischem Material bestehen, die äußere Hülse (12) aus wärmeschrumpfbarem thermoplastischem Material besteht und die Hilfshülse (13, 15, 22 oder 26) einen Außenteil (16, 20, 22 oder 24) aus relative hartem thermoplastischem Material und einen Innenteil aus relativ weichem Material, der den Dichtring (17, 21, 23 oder 25) bildet, besitzt.

FIG. 2

FIG. 1

FIG. 4

FIG. 3

FIG. 6

FIG. 5

FIG. 7